# EUROPÄISCHE PATENTSCHRIFT

(11) **EP 1 886 367 B1**
(45) Veröffentlichungstag und Bekanntmachung des Hinweises auf die Patenterteilung: **18.05.2011**
(21) Anmeldenummer: 06707655.4
(22) Anmeldetag: 31.03.2006
(51) Int. Cl.: H01M 8/02, H01M 8/10, H01M 4/86

(54) **GASDIFFUSIONSSCHICHT, ANORDNUNG UND VERFAHREN ZUR HERSTELLUNG EINER GASDIFFUSIONSSCHICHT**
GAS DIFFUSION LAYER, ARRANGEMENT AND METHOD FOR THE PRODUCTION THEREOF
COUCHE DE DIFFUSION GAZEUSE, SYSTEME ET PROCEDE POUR PRODUIRE UNE COUCHE DE DIFFUSION GAZEUSE

(30) Priorität: 11.05.2005 DE 102005022484
(43) Veröffentlichungstag der Anmeldung: 13.02.2008
(73) Patentinhaber: Carl Freudenberg KG, 69469 Weinheim (DE)
(72) Erfinder: HELMBOLD, Axel, 65719 Hofheim (DE); SALAMA, Karim, 69469 Weinheim (DE); REIBEL, Denis, 67850 Herrlisheim (FR); WAGNER, Klaus-Dietmar, 68542 Heddesheim (DE); BOCK, Achim, 69469 Weinheim (DE); WAGENER, Silke, 64285 Darmstadt (DE)
(74) Vertreter: Ripper, Monika Sigrid
(86) Internationale Anmeldenummer: PCT/EP2006/002927
(87) Internationale Veröffentlichungsnummer: WO 2006/119825

(56) Entgegenhaltungen:
- EP-A- 1 298 745
- WO-A-98/27606
- US-A1- 2003 008 200
- US-A1- 2005 026 012
- US-B1- 6 183 898

## Beschreibung

### Technisches Gebiet

Die Erfindung betrifft eine Gasdiffusionsschicht gemäß dem Oberbegriff des Patentanspruchs 1.

### Stand der Technik

Aus der EP 1 298 745 A2 ist eine Gasdiffusionsschicht bekannt, welche aus mehreren porösen Lagen gefertigt ist. Aus der WO 98/27606 ist eine Gasdiffusionsschicht mit einem elektrisch leitfähigen Füllstoff bekannt. In der US 200510026012 A1 ist eine Gasdiffusionsschicht mit einer Beschichtung offenbart, die Poren im Größenbereich von wenigen bis einigen hundert Nanometern aufweist. Die US 2003/0008200 A1 offenbart eine Gasdiffusionsschicht mit einem beschichteten Kohlefaserpapier. Schließlich offenbart die US 6,183,898 B1 eine Gasdiffusionsschicht, welche mit einem elektrisch leitfähigen Material beschichtet ist, das eine elektrische Leitfähigkeit von mehr als 10 mS/cm² aufweist.

Gasdiffusionsschichten finden in Brennstoffzellen Verwendung. Der konventionelle Aufbau einer Brennstoffzellen zeichnet sich durch eine Schichtfolge einer Bipolarplatte mit Gasverteilerstruktur, einer Gasdiffusionsschicht und einer Reaktionsschicht aus. Diese Schichten werden zur Minimierung von Kontaktwiderständen verpresst. Um eine homogene von Dickentoleranzen unbeeinflusste Verpressung zu erreichen, ist eine möglichst hohe Elastizität der Gasdiffusionsschicht erwünscht.

Elastische Gasdiffusionsschichten dringen jedoch in die Gaskanäle einer Brennstoffzelle ein. Bei Gasverteilern von Brennstoffzellen im Automobilbereich sind die Kanaltiefen sehr gering und relativ breit. Die Kanaltiefe ist geringer als 400 µm, die Kanalbreite größer als 1000 µm. Diese Dimensionierung ist erforderlich, um den Anforderungen an die Brennstoffzellen gerecht zu werden.

Der Druckabfall innerhalb einer Leitung ist nicht linear, sondern proportional zum Kehrwert der vierten Potenz des Radius einer Leitung. Daher führt schon ein geringes Eindringen der Gasdiffusionsschicht in die Kanäle zu einem erheblichen Druckabfall in der Zelle. Daraus resultiert eine Verringerung deren Wirkungsgrads aufgrund parasitärer Verluste im Kompressor.

Gleichzeitig ist der Anpressdruck der Gasdiffusionsschicht auf die Reaktionsschicht bzw. eine Membran im Bereich des Kanals gering. Hieraus resultiert ein erhöhter Kontaktwiderstand in diesem Bereich, was zusätzlich den Wirkungsgrad der Zelle reduziert.

Im Falle von Druckdifferenzen zwischen Anode und Kathode der Brennstoffzelle ist auch eine Durchbiegung der Gasdiffusionsschicht zu befürchten. Für solche Anwendungen werden deshalb fast ausschließlich Kohlenstofffaserpapiere mit sehr hohem Zugmodul eingesetzt. Ab einer bestimmten Dicke sind diese eingesetzten Papiere jedoch nicht mehr aufrollbar und daher auch nicht kontinuierlich herstell- bzw. verarbeitbar.

Die aus dem Stand der Technik bekannten Gasdiffusionsschichten weisen daher in vielerlei Hinsicht Nachteile auf.

### Darstellung der Erfindung

Der Erfindung liegt daher die Aufgabe zugrunde, ein System zu schaffen, welches einen problemlosen Betrieb einer Brennstoffzelle unter Optimierung deren Wirkungsgrads realisiert.

Erfindungsgemäß wird die voranstehende Aufgabe mit den Merkmalen des Patentanspruchs 1 gelöst.

Danach ist die Gasdiffusionsschicht gekennzeichnet durch ein Biegemodul von weniger als 1 GPa und einen ersten Bereich, der ein geringeres Zugmodul als der zweite Bereich aufweist, wobei die Beschichtung ein Flächengewicht von 1 bis 100 g/m² aufweist.

Erfindungsgemäß ist zunächst erkannt worden, dass eine Gasdiffusionsschicht zur optimalen Entfaltung ihrer Wirkung verschiedene funktionelle Bereiche aufweisen muss. In einem zweiten Schritt ist erkannt worden, dass die Vorkehrung einer Stabilisierungszone verhindert, dass der erste Bereich bei Komprimierung der Gasdiffusionsschicht in die Gaskanäle einer Brennstoffzelle hineingedrückt wird. Auf raffinierte Weise ist sicher gestellt, dass die Gasdiffusionsschicht in ausreichendem Maße mit Druck beaufschlagt werden kann, um den Kontaktwiderstand der Gasdiffusionsschicht zu reduzieren. Weiterhin ist gewährleistet, dass sich die Gasdiffusionsschicht nicht in die Gaskanäle hineindrückt. Die konstruktive Ausgestaltung der erfindungsgemäßen Gasdiffusionsschicht optimiert daher den Wirkungsgrad einer Brennstoffzelle und stellt deren problemlosen Betrieb sicher.

Der erste Bereich weist ein geringeres Zugmodul als der zweite Bereich auf. Diese Ausgestaltung stellt sicher, dass sich der erste Bereich eher durchbiegt als der zweite. Die Gasdiffusionsschicht ist in ihrer Gesamtheit durch ein Biegemodul von weniger als 1 GPa charakterisiert. Eine Gasdiffusionsschicht, welche ein solches Biegemodul aufweist, ist problemlos rollfähig. Dies ermöglicht eine kontinuierliche Herstellung der Gasdiffusionsschicht, da diese auf Walzen aufgewickelt werden kann, ohne zu brechen.

Der zweite Bereich ist als Beschichtung ausgestaltet. Die Vorkehrung einer Beschichtung ermöglicht eine besonders dünne Ausgestaltung des zweiten Bereichs. Insoweit ist ein besonders kompakter Aufbau der gesamten Gasdiffusonsschicht realisierbar.

Die Beschichtung weist ein Flächengewicht von 1 bis 100 g /m² auf. Die Auswahl des Flächengewichts aus diesem Bereich stellt eine hinreichende Stabilität der Gasdiffusionsschicht sicher. Insbesondere ist sicher gestellt, dass die Gasdiffusionsschicht problemlos aufrollbar ist ohne zu brechen.

Folglich ist die eingangs genannte Aufgabe gelöst.

In besonders vorteilhafter Weise könnte der erste Bereich eine höhere Kompressibilität als der zweite Bereich aufweisen. Diese konkrete Ausgestaltung stellt sicher, dass der erste Bereich problemlos komprimierbar ist, der zweite Bereich jedoch eine erhöhte Stabilität aufweist. Diese erhöhte Stabilität stellt sicher, dass sich der zweite Bereich nicht in Hohlräume einpresst, welche an diesen angrenzen.

Der erste Bereich könnte elastischer als der zweite Bereich ausgebildet sein. Diese konkrete Ausgestaltung erlaubt ein Ausgleichen von Unebenheiten oder Strukturen, die an den ersten Bereich angepresst werden. Insoweit kann der erste Bereich eine besondere Dichtheit realisieren.

Der erste Bereich könnte als Vliesstoff, Gewebe, Gewirke, Gitter oder Netz ausgestaltet sein. Die Verwendung dieser Werkstoffe verleiht der Gasdiffusionsschicht eine besondere Stabilität. Des Weiteren sind diese Werkstoffe kommerziell problemlos erhältlich, sodass eine Fertigung der Gasdiffusionsschicht problemlos realisierbar ist.

Der erste Bereich könnte als Karbonfasem umfassender Vliesstoff ausgebildet sein. Dabei ist denkbar, dass der erste Bereich als poröser, Kohlefaser- oder Kohlenstoff-Objekte umfassender Vliesstoff ausgestaltet ist. Denkbar ist auch, dass der erste Bereich als Gewebe, Gewirk, Gitter oder Netz ausgestaltet ist. Die Verwendung von Kohlefasern verleiht dem ersten Bereich eine besondere elektrische Leitfähigkeit.

Der Vliesstoff könnte bis zu 30 Gew.-% Bindefasem umfassen und ein Flächengewicht von 30 bis 300 g/m² aufweisen. Die Verwendung von bis zu 30 Gew.-% Bindefasem stellt sicher, dass die gewünschten funktionellen physikalischen und chemischen Eigenschaften des jeweiligen Bereichs nicht übermäßig beeinflusst werden. Das gewählte Flächengewicht erlaubt eine mechanische Verfestigung des Vliesstoffs. Dabei ist denkbar, dass der Vliesstoff durch Hochdruck-Fluidstrahlen bei Drücken von 100 bis 300 bar mechanisch verfestigt wird.

Der Vliesstoff könnte durch Fluidstrahlen verfestigt und durch Kalandrierung verdichtet sein. Diese Maßnahmen erhöhen die Stabilität des Vliesstoffs in besonderer Weise. Durch die Kalandrierung ist es des Weiteren möglich, dem Vliesstoff Strukturen aufzuprägen oder diesen zu dimensionieren.

Der Vliesstoff könnte bei 800 bis 2500°C karbonisiert sein. Die Karbonisierung des Vliesstoffs stellt eine weitere Verfestigung sicher. Des Weiteren kann durch Karbonisierung die elektrische Leitfähigkeit des Vliesstoffes erhöht werden.

Die Beschichtung könnte ein karbonisierfähiges Bindemittel umfassen. Die Verwendung eines karbonisierfähigen Bindemittels erlaubt eine Stabilisierung der Gasdiffusionsschicht.

Die Beschichtung könnte Harze und/oder thermoplastische Werkstoffe umfassen. Die Auswahl dieser Materialien stellt eine problemlose Verarbeitbarkeit sicher, da sie mit den meisten gängigen Fasermaterialien einen Verbund eingehen. Insbesondere ist es möglich, die Beschichtung so dünn aufzutragen, dass höchstens 10% der Oberfläche des ersten Bereichs bedeckt sind. Als karbonisierfähige Bindemittel sind Peche oder Teere aus Steinkohlenteer, Petroleum, Holz oder Mischungen daraus, Phenolharze, Furanharze, Epoxyharze, Polystyrole, -acrylate, Acrylnitrilbutadien, Styrolterpolymer, Melaminharze, Phenolnovolake mit Hexamethylentetramin, Phenol-Epoxydharz-Präkondensate, Copolymere, modifizierte Polymere oder Mischungen der aufgeführten Verbindungen denkbar. Auch Saccharide, z.B. Monosaccharosen wie Haushaltszucker eignen sich dafür. All diese Bindemittel zeichnen sich durch eine besonders geeignete Verarbeitbarkeit aus. Es sind auch Bindemittel denkbar, die nicht karbonisiert werden können. Beispielsweise ist Polytetrafluorethylen denkbar, welches sich durch besonders hydrophobe Eigenschaften auszeichnet

Der zweite Bereich könnte Polyvinylalkohole, Ruße, Graphite, Metalle, Kohlenstofffasem oder Metallfasern aufweisen. Es ist insbesondere denkbar, dass diese Beimengungen einem zweiten Bereich beigesetzt sind, weicher als Beschichtung ausgestaltet ist. Die Verwendung von Polyvinylalkoholen erlaubt die Einstellung der Porosität des zweiten Bereichs. Die Beimengung von Russ, Graphit oder Metall erlaubt die Erhöhung der elektrischen Leitfähigkeit des zweiten Bereichs. Eine Erhöhung der Festigkeit kann durch Beisetzung von Kohlenstofffasem oder Metallfasern erzielt werden.

Die Gasdiffusionsschicht könnte einen progressiven Aufbau aufweisen. Ein progressiver Aufbau kann durch Gradienten beschrieben werden. Insbesondere ist denkbar, dass die Gasdiffusionsschicht aus einem einheitlichen Material besteht, welches in Bezug auf seine Biegesteifigkeit, sein Zugmodul oder andere mechanische Eigenschaften durch Gradienten in unterschiedlichen Raumrichtungen charakterisierbar ist. Vor diesem Hintergrund ist beispielsweise denkbar, dass die Kompressibilität vom ersten Bereich in Richtung zweiten Bereich kontinuierlich abnimmt. Eine solche kontinuierliche Abnahme ist in Bezug auf alle mechanischen Eigenschaften in sämtlichen Raumrichtungen denkbar. Hierdurch ist die Gasdiffusionsschicht an vorgegebene räumliche Bedingungen anpasspar.

Nach Patentanspruch 13 umfasst eine Anordnung zwei Gasdiffusionsschichten der zuvor beschriebenen Art, wobei die Gasdiffusionsschichten mit ihren ersten Bereichen einander zugewandt liegen und die zweiten Bereiche voneinander abgewandt orientiert sind.

Um Wiederholungen zu vermeiden sei in Bezug auf die erfinderische Tätigkeit auf die Ausführung zur Gasdiffusionsschicht als solcher verwiesen. Die erfindungsgemäße Anordnung zeichnet sich insbesondere dadurch aus, dass das Biegemodul einer solchen Paarung um mindestens 25% höher ist, als wenn die zweiten Bereiche einander zugewandt positioniert wären.

Ganz in Abhängigkeit von den Anforderungen an eine Brennstoffzelle, in der die beschriebenen Gasdiffusionsschichten Verwendung finden, ist es auch denkbar, eine Anordnung zu schaffen, bei der die zweiten Bereiche zweier Gasdiffusionsschichten einander zugewandt positioniert sind.

Ein Verfahren zur Herstellung einer zuvor beschriebenen Gasdiffusionsschicht wird mit den Merkmalen des Patentanspruchs 14 angegeben. Danach wird einem ersten Bereich mit poröser Struktur ein zweiter Bereich zugeordnet, der als Stabilisierungszone ausgestaltet ist.

Die Bereiche werden bei einem Anpressdruck von 0,1 bis 40 MPa und einer Temperatur von 20 bis 400°C zusammengepresst. Dieser Verfahrensschritt ist unter Einsatz geeigneter Bindemittel denkbar. Die Verwendung von Bindern stellt einen festen Verbund der zwei Bereiche sicher. Dieser Verfahrensschritt kann des Weiteren einen Laminierschritt unter definierten Druck- und Temperaturbedingungen umfassen. Der Schritt des Laminierens erlaubt eine selektive Druckbeaufschlagung der Gasdiffusionsschicht. Des Weiteren ist denkbar, dass der Gasdiffusionsschicht Strukturen aufgeprägt werden.

Der erste Bereich wird einer Verfestigung unterzogen. Dabei ist denkbar, dass der erste Bereich einer mechanischen Verfestigung unterzogen wird. Vor diesem Hintergrund könnte ein als Faserflor ausgebildeter erster Bereich durch Hochdruck-Fluidstrahlen verfestigt werden. Bei der Behandlung mit Hochdruck-Fluidstrahlen werden die Fasern verwirbelt und miteinander verschlungen. Ein Teil der Fasern weist nach dieser Behandlung eine Orientierung in Z-Richtung, nämlich in Richtung der Dicke des Vliesstoffes auf. Optional wird der verfestigte Vliesstoff durch mechanisches Verdichten auf 30 bis 90% seiner Ausgangsdicke verdichtet.

Um Wiederholungen zu vermeiden, sei in Bezug auf die erfinderische Tätigkeit auf die Ausführungen zur Gasdiffusionsschicht als solcher verwiesen.

In vorteilhafter Weise könnten die Bereiche gemeinsam karbonisiert oder graphitiert werden. Diese Ausgestaltung erlaubt einen besonders homogenen Aufbau der gesamten Gasdiffusionsschicht. Insbesondere ist durch diesen Verfahrensschritt realisiert, dass die beiden Bereiche eine gleiche Fertigungsgeschichte durchlaufen haben, was deren Materialeigenschaften vereinheitlicht.

Der erste Bereich könnte einer schrittweisen thermischen Behandlung zunächst bei einer Temperatur von bis zu 1500°C und dann bis zu 2500° C unterzogen werden. Dieser Verfahrensschritt erlaubt die Karbonisierung oder Graphitierung des ersten Bereichs in mehreren Schritten.

Alle Verfahrensschritte können mehrmals wiederholt und soweit technisch sinnvoll in willkürlicher Abfolge durchgeführt werden.

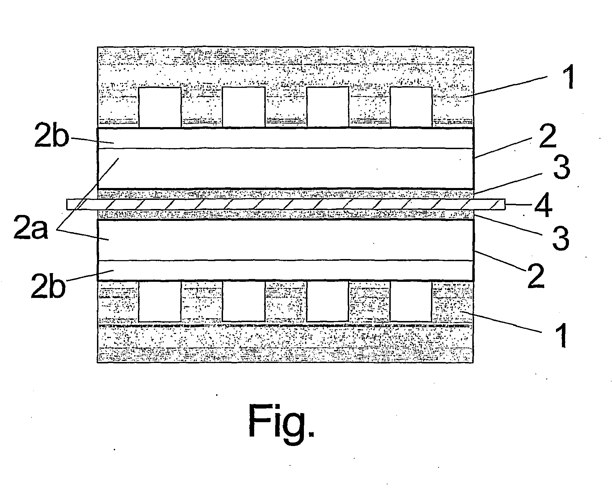

Es gibt nun verschiedene Möglichkeiten, die Lehre der vorliegenden Erfindung auf vorteilhafte Weise auszugestalten und weiterzubilden. Dazu ist einerseits auf die den nebengeordneten Patentansprüchen nachgeordneten Ansprüche, andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung werden auch im Allgemeinen bevorzugte Ausgestaltungen und Weiterbildungen der Lehre erläutert.

### Kurzbeschreibung der Zeichnung

In der Zeichnung zeigt die einzige
- Fig.: eine Anordnung in einer Brennstoffzelle, welche eine Gasdiffusionsschicht mit einer porösen Struktur und einer Stabilisierungszone umfasst.

### Ausführung der Erfindung

Die einzige Fig. zeigt eine Anordnung innerhalb einer Brennstoffzelle. Zwischen einem Gasverteiler 1 ist eine Gasdiffusionsschicht 2 angeordnet. Die Gasdiffusionsschicht 2 umfasst zwei miteinander wirkverbundene funktionelle Bereiche 2a und 2b. Der erste Bereich 2a ist als poröse Struktur ausgestaltet. Der zweite Bereich 2b ist als Stabilisierungszone ausgestaltet. An die Gasdiffusionsschicht 2 schließt sich eine Elektrode 3 an, welche mit einer Membran 4 in Verbindung steht. Der Aufbau der Anordnung ist in Bezug auf die Membran 4 symmetrisch.

Nachfolgend werden zwei Beispiele für mögliche Ausgestaltungen einer solchen Gasdiffusionsschicht angegeben:

### Nicht erfindungsgemäßes Beispiel 1:

Eine zweilagige Gasdiffusionsschicht wird wie folgt hergestellt:

Zunächst wird die erste Lage gefertigt, indem gekräuselte, oxidierte Polyacrylnitrilfasern kardiert und zu einem Flor gelegt werden. Danach wird dieses durch Hochdruckfluidwasserstrahlen bei einem Druck von 150 Bar verwirbelt und verfestigt. Im Anschluss erfolgt eine Trocknung dieser Lage bei 120°C. Darauf wird die erste Lage bei einer Temperatur von 320°C mittels eines Kalanders auf 0,2 mm Dicke gepresst. Im Anschluss daran erfolgt eine Karbonisierung der ersten Lage bei einer Temperatur von 1400°C unter Stickstoffatmosphäre. Die so gefertigte erste Lage weist ein Flächen-Gewicht von 65 g/m² auf.

Die zweite Lage wird durch ein Carbon-Faser-Papier, welches kommerziell erhältlich ist, repräsentiert. Dieses Carbon-Faser-Papier wird unter der Bezeichnung TGPH 30 von der Fa. Toray Industries Inc., Japan gefertigt. Die beiden Lagen werden beim Einbau in eine Brennstoffzelle übereinander gelegt und verpresst. Hierbei ist die erste Lage der Membran einer Brennstoffzelle zugewandt.

### Beispiel 2:

Das Beispiel 2 stellt eine Gasdiffusionsschicht dar, bei welcher die erste Lage analog der ersten Lage aus Beispiel 1 gefertigt wird. Die erste Lage unterscheidet sich lediglich im Flächen-Gewicht von der Lage aus Beispiel 1. Das Flächen-Gewicht der ersten Lage nach Beispiel 2 beträgt 100 g/m². Als zweite Lage fungiert eine Beschichtung. Die Beschichtung weist ein Flächen-Gewicht von 25 g/m² auf und besteht aus 80% Ruß und 20% Phenolharz (Typ 9282 FP, der Firma Bakelite, Deutschland). Die Beschichtung ist punktförmig, wobei die Punkte einen Durchmesser aufweisen, der kleiner als 0,5 mm ist. Die Beschichtung bewirkt eine 27%-ige einseitige Flächenbedeckung der ersten Lage. Die Beschichtung wird auf die erste Lage mittels Siebdruck aufgebracht. Beim Siebdruck wird eine Paste verwendet, welche aus 20% Feststoff, nämlich Ruß und Phenolharz, und 80% Wasser besteht. Nach dem Aufbringen der Paste durch Siebdruck erfolgt ein Trocknen bei einer Temperatur von 120°C, wodurch der Wasseranteil verdampft. Ein Tempervorgang bei einer Temperatur von 200°C führt zum Ausreagieren des Phenolharzes. Im Anschluss an diese Fertigungsschritte erfolgt eine Karbonisierung des Verbundes unter Stickstoffatmosphäre bei 1400°C.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen. Abschließend sei ganz besonders hervorgehoben, dass die zuvor rein willkürliCh gewählten Ausführungsbeispiele lediglich zur Erörterung der erfindungsgemäßen Lehre dienen, diese jedoch nicht auf diese Ausführungsbeispiele einschränken.

## Patentansprüche

1. Gasdiffusionsschicht (2), umfassend mindestens zwei miteinander wirkverbundene funktionelle Bereiche (2a, 2b), wobei der erste Bereich (2a) eine poröse Struktur aufweist, wobei der zweite Bereich (2b) als Stabilisierungszone ausgestaltet ist und wobei der zweite Bereich (2b) als Beschichtung ausgestaltet ist, **gekennzeichnet durch** ein Biegemodul von weniger als 1 GPa und einen ersten Bereich (2a), der ein geringeres Zugmodul als der zweite Bereich (2b) aufweist, wobei die Beschichtung ein Flächengewicht von 1 bis 100 g/m² aufweist.

2. Gasdiffusionsschicht nach Anspruch 1, **dadurch gekennzeichnet, dass** der erste Bereich (2a) eine höhere Kompressibilität als der zweite Bereich (2b) aufweist.

3. Gasdiffusionsschicht nach Anspruch 1 oder 2, **dadurch gekennzeichnet, dass** der erste Bereich (2a) elastischer als der zweite Bereich (2b) ist.

4. Gasdiffusionsschicht nach einem der Ansprüche 1 bis 3, **dadurch gekennzeichnet, dass** der erste Bereich (2a) als Vliesstoff, Gewebe, Gewirke, Gitter oder Netz ausgestaltet ist.

5. Gasdiffiusionsschicht nach einem der Ansprüche 1 bis 4, **dadurch gekennzeichnet, dass** der erste Bereich (2a) als Karbonfasem umfassender Vliesstoff ausgebildet ist.

6. Gasdiffusionsschicht nach Anspruch 5, **dadurch gekennzeichnet, dass** der Vliesstoff bis zu 30 Gew.% Bindefasern umfasst und ein Flächengewicht von 30 bis 300 g/m² aufweist.

7. Gasdiffusionsschicht nach Anspruch 5 oder 6, **dadurch gekennzeichnet, dass** der Vliesstoff durch Fluidstrahlen verfestigt und durch Kalandrierung verdichtet ist.

8. Gasdiffusionsschicht nach einem der Ansprüche 5 bis 7, **dadurch gekennzeichnet, dass** der Vliesstoff bei 800 - 2500° C karbonisiert ist.

9. Gasdiffusionsschicht nach einem der Ansprüche 1 bis 8, **dadurch gekennzeichnet, dass** die Beschichtung ein karbonisierfähiges Bindemittel umfasst.

10. Gasdiffusionsschicht nach einem der Ansprüche 1 bis 9, **dadurch gekennzeichnet, dass** die Beschichtung Harze und / oder thermoplastische Werkstoffe umfasst.

11. Gasdiffusionsschicht nach einem der Ansprüche 1 bis 10, **dadurch gekennzeichnet, dass** der zweite Bereich (2b) Polyvinylalkohole, Ruße, Graphite, Metalle, Kohlenstofffasern oder Metallfasern aufweist.

12. Gasdiffusionschicht nach einem der Ansprüche 1 bis 11, **gekennzeichnet durch** einen progressiven Aufbau.

13. Anordnung umfassend zwei Gasdiffusionsschichten nach einem der voranstehenden Ansprüche, wobei die Gasdiffusionschichten mit ihren ersten Bereichen (2a) einander zugewandt liegen und die zweiten Bereiche (2b) voneinander abgewandt orientiert sind.

14. Verfahren zur Herstellung einer Gasdiffusionsschicht nach einem der voranstehenden Ansprüche, wobei einem ersten Bereich (2a) mit poröse Struktur ein zweiter Bereich (2b) zugeordnet wird, der als Stabilisierungszone ausgestaltet ist, wobei der erste Bereich (2a) einer Verfestigung unterzogen wird und wobei die Bereiche (2a, 2b) bei einem Anpressdruck von 0,1 bis 40 MPa und einer Temperatur von 20 bis 400°C zusammengepresst werden.

15. Verfahren nach Anspruch 14, **dadurch gekennzeichnet, dass** die Bereiche (2a, 2b) gemeinsam karbonisiert oder graphitiert werden.

16. Verfahren nach Anspruch 14 oder 15, **dadurch gekennzeichnet, dass** mindestens ein Bereich (2a, 2b) einer schrittweisen thermischen Behandlung bei Temperaturen bis zu 2500°C unterzogen wird.

17. Verfahren nach einem der Ansprüche 14 bis 16, **dadurch gekennzeichnet, dass** einzelne Verfahrensschritte mehrmals wiederholt werden.

## Claims

1. Gas diffusion layer (2) comprising at least two operably linked functional regions (2a, 2b), wherein the first region (2a) has a porous structure, wherein the second region (2b) is embodied as a stabilization zone and wherein the second region (2b) is embodied as a coating, **characterized by** a flexural modulus of less than 1 GPa and a first region (2a) which has a lower tensile modulus than the second region (2b), wherein the coating has a basis weight of 1 to 100 g/m².

2. Gas diffusion layer according to Claim 1, **characterized in that** the first region (2a) has a higher compressibility than the second region (2b).

3. Gas diffusion layer according to Claim 1 or 2, **characterized in that** the first region (2a) is more elastic than the second region (2b).

4. Gas diffusion layer according to any one of Claims 1 to 3, **characterized in that** the first region (2a) is embodied as a nonwoven fabric, as a woven fabric, as a knitted fabric, as a lattice or as a mesh.

5. Gas diffusion layer according to any one of Claims 1 to 4, **characterized in that** the first region (2a) is configured as a nonwoven fabric comprising carbon fibres.

6. Gas diffusion layer according to Claim 5, **characterized in that** the nonwoven fabric comprises up to 30% by weight of binding fibres and has a basis weight of 30 to 300 g/m².

7. Gas diffusion layer according to Claim 5 or 6, **characterized in that** the nonwoven fabric is consolidated by jets of fluid and compacted by calendering.

8. Gas diffusion layer according to any one of Claim 5 to 7, **characterized in that** the nonwoven fabric is carbonized at 800 - 2500°C.

9. Gas diffusion layer according to any one of Claims 1 to 8, **characterized in that** the coating comprises a carbonizable binding agent.

10. Gas diffusion layer according to any one of Claims 1 to 9, **characterized in that** the coating comprises resins and/or thermoplastic materials of construction.

11. Gas diffusion layer according to any one of Claims 1 to 10, **characterized in that** the second region (2b) includes polyvinyl alcohols, carbon blacks, graphites, metals, carbon fibres or metal fibres.

12. Gas diffusion layer according to any one of Claims 1 to 11, **characterized by** a progressive construction.

13. Arrangement comprising two gas diffusion layers according to any preceding claim, wherein the gas diffusion layers face each other with their first regions (2a) and the second regions (2b) face away from each other.

14. Process for producing a gas diffusion layer according to any preceding claim, wherein a first region (2a) of porous structure is assigned a second region (2b) which is embodied as a stabilization zone, wherein the first region (2a) is subjected to consolidation and wherein the regions (2a, 2b) are pressed together at a contact pressure of 0.1 to 40 MPa and a temperature of 20 to 400°C.

15. Process according to Claim 14, **characterized in that** the regions (2a, 2b) are conjointly carbonized or graphitized.

16. Process according to Claim 14 or 15, **characterized in that** at least one region (2a, 2b) is subjected to a stepwise thermal treatment at temperatures up to 2500°C.

17. Process according to any one of Claims 14 to 16, **characterized in that** individual process steps are repeated more than once.

## Revendications

1. Couche (2) de diffusion de gaz comprenant au moins deux parties fonctionnelles (2a, 2b) reliées fonctionnellement l'une à l'autre, la première partie (2a) présentant une structure poreuse et la deuxième partie (2b) étant configurée comme zone de stabilisation et la deuxième partie (2b) étant configurée comme revêtement,
**caractérisée par**
un module de flexion de moins de 1 GPa et une première partie (2a) dont le module de traction est plus petit que celui de la deuxième partie (2b), le revêtement présentant un poids par unité de surface de 1 à 100 g/m².

2. Couche de diffusion de gaz selon la revendication 1, **caractérisée en ce que** la première partie (2a) a une compressibilité plus élevée que la deuxième partie (2b).

3. Couche de diffusion de gaz selon les revendications 1 ou 2, **caractérisée en ce que** la première partie (2a) est plus élastique que la deuxième partie (2b).

4. Couche de diffusion de gaz selon l'une des revendications 1 à 3, **caractérisée en ce que** la première partie (2a) est configurée comme feutre, tissu, tricot, grille ou treillis.

5. Couche de diffusion de gaz selon l'une des revendications 1 à 4, **caractérisée en ce que** la première partie (2a) est configurée comme feutre contenant des fibres de carbone.

6. Couche de diffusion de gaz selon la revendication 5, **caractérisée en ce que** le feutre comporte jusque 30 % en poids de fibres de liaison et présente un poids par unité de surface de 30 à 300 g/m².

7. Couche de diffusion de gaz selon les revendications 5 ou 6, **caractérisée en ce que** le feutre est solidifié par jets de fluide et est comprimé par calandrage.

8. Couche de diffusion de gaz selon l'une des revendications 5 à 7, **caractérisée en ce que** le feutre est carbonisé entre 800 et 2 500°C.

9. Couche de diffusion de gaz selon l'une des revendications 1 à 8, **caractérisée en ce que** le revêtement comporte un liant apte à être carbonisé.

10. Couche de diffusion de gaz selon l'une des revendications 1 à 9, **caractérisée en ce que** le revêtement comporte des résines et/ou des matériaux thermoplastiques.

11. Couche de diffusion de gaz selon l'une des revendications 1 à 10, **caractérisée en ce que** la deuxième partie (2b) contient des alcools polyvinyliques, des noirs de carbone, des graphites, des métaux, des fibres de carbone ou des fibres métalliques.

12. Couche de diffusion de gaz selon l'une des revendications 1 à 11, **caractérisée par** une structure progressive.

13. Système comportant deux couches de diffusion de gaz selon l'une des revendications précédentes, les couches de diffusion de gaz étant tournées l'une vers l'autre par leur première partie (2a) et les deuxièmes parties (2b) étant orientées de manière à ne pas être tournées l'une vers l'autre.

14. Procédé de fabrication d'une couche de diffusion de gaz selon l'une des revendications précédentes, dans lequel une deuxième partie (2b) est associée à une première partie (2a) dotée d'une structure poreuse et configurée comme zone de stabilisation, la première partie (2a) subissant une solidification et les parties (2a, 2b) étant comprimées ensemble sous une pression de 0,1 à 40 MPa et à une température de 20 à 400°C.

15. Procédé selon la revendication 14, **caractérisé en ce que** les parties (2a, 2b) sont carbonisées ou graphitées ensemble.

16. Procédé selon les revendications 14 ou 15, **caractérisé en ce qu'**au moins une partie (2a, 2b) subit un traitement thermique par étages, à des températures allant jusque 2 500°C.

17. Procédé selon l'une des revendications 14 à 16, **caractérisé en ce que** certaines étapes du procédé sont répétées plusieurs fois.
